# EUROPEAN PATENT APPLICATION

(11) **EP 4 554 191 A1**
(43) Date of publication of application: **14.05.2025**
(21) Application number: 23853039.8
(22) Date of filing: 10.08.2023
(51) Int. Cl.: H04L 67/63, H04L 67/303, H04L 67/131, G06F 8/41, H04W 88/18

(54) **APPARATUS AND METHOD FOR PROVIDING AR CONTENT SERVICE BASED ON TERMINAL CAPABILITY IN WIRELESS COMMUNICATION SYSTEM**

(30) Priority: 10.08.2022 KR 20220099956
(71) Applicant: Samsung Electronics Co., Ltd., Suwon-si, Gyeonggi-do 16677 (KR)
(72) Inventor: RHYU, Sungryeul, Suwon-si, Gyeonggi-do 16677 (KR); YANG, Hyunkoo, Suwon-si, Gyeonggi-do 16677 (KR)
(74) Representative: Gulde & Partner
(86) International application number: PCT/KR2023/011861
(87) International publication number: WO 2024/035172

(57) **Abstract**

The present disclosure relates to a 5G or 6G communication system for supporting a higher data transmission rate, and an operating method of an application function (AF) entity according to the present disclosure comprises the steps of: transmitting a report request message to a terminal; receiving a report message including capability values of the terminal in response to the report request message; compiling service access information on the basis of the capability values of the terminal; and transmitting, to an application provider, a message including a provisioned parameter and address, on the basis of the compiled service access information.

## Description

### [Technical Field]

The disclosure relates to a wireless communication system and, more specifically, to a device and a method for providing an augmented reality (AR) content service, based on UE capability.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for largecapacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing endto-end AI support functions, and next-generation distributed computing technology for implementing services at levels of complexity exceeding the limit of UE operation capability by utilizing ultra-high-performance communication and computing resources.

### [Disclosure]

### [Technical Problem]

The disclosure may provide a method for describing a service configured by multiple types of process flows (or work flows) provided with regard to each capability of a UE, and a method for providing a service, based on a service description including multiple process flows.

The disclosure may provide a method for solving the problem in that, when a service provider wants to provide user experiences, a service provided by being delegated to a communication network system may or may not play content according to the UE's capability.

The disclosure may provide a method in which a service provider provides multiple process flows, and a method in which a communication network system selects one from the process flows, based on the capability of a UE, an external UE, the communication network system's transmission system, and the communication network system edge/cloud server, and accordingly provides identical or similar user experiences in UEs having different capabilities.

### [Technical Solution]

A method for operating an application function (AF) entity according to the disclosure includes: transmitting a report request message to a terminal; receiving a report message including capability values of the terminal in response to the report request message; compiling service access information, based on the capability values of the terminal; and transmitting a message including provisioned parameters and addresses to an application provider, based on the compiled service access information.

A method for operating a first terminal according to the disclosure includes: receiving service access information (SAI) including a first capability reporting parameter set (CRPS) from an application function (AF) entity; transmitting SAI including the first CRPS to a second terminal; receiving a report message including capability values of the second terminal from the second terminal in response to the SAI; and transmitting a second CRPS including capability values of the second terminal and capability values of the first terminal to the AF entity.

A method for operating an edge enabler server (EER) according to the disclosure includes: converting a first capability reporting parameter set (CRPS) into a filter of an edge application server (EAS); identifying capability of the EAS; in case that the EAS is not available, based on capability of the EAS, transmitting a message to the EAS to indicate that the EAS is not available; and generating a second CRPS, based on capability of the EAS.

A terminal according to the disclosure includes: a transceiver; a processor configured to control the transceiver; and a memory configured to store instructions executed by the processor. The processor includes: a media player (MP) including a capability processing function (CPF); and a media session handler (MSH) connected to the media player.

The MSH may receive service access information (SAI) including a first capability reporting parameter set (CRPS) from an application function (AF) entity, and transmit the CRPS to the MP.

The MP may identify capability items, based on the CRPS.

The MP may receive capability values from the CPF.

The MP may transmit the capability values to the MSH.

The MSH may generate a report message including a second CRPS, based on the capability values.

The MSH may transmit the report message to the AF.

A method for operating an application function (AF) entity according to the disclosure includes: transmitting service access information (SAI) including a first capability reporting parameter set (CRPS) to a media session handler (MSH) of a terminal; receiving a second CRPS generated based on the first CRPS from the MSH; comparing a capability item-specific mandated value and a capability item-specific boundary value, based on the second CRPS; determining whether a process flow regarding the terminal can be provided, based on the comparison result; and in case that the process flow cannot be provided, transmitting a message requesting a CRPS for a different process flow to an application provider.

A method for operating an application function (AF) entity according to the disclosure includes: receiving, from a terminal, a capability item value regarding the terminal; determining, based on the capability item value, whether a process flow regarding the terminal can be provided; in case that the process flow cannot be provided, transmitting a request message requesting service access information (SAI) to an application provider, based on the capability item value; receiving a response message including the SAI from the application provider; and transmitting a media player entry to the terminal, based on the SAI.

### [Advantageous Effects]

A device and a method for providing an AR content service based on UE capability according to the disclosure may support selection of multiple process flows.

A device and a method for providing an AR content service based on UE capability according to the disclosure may provide a method for communication between a UE and a server for determining one of multiple process flows.

### [Description of Drawings]

FIG. 1 is a conceptual diagram illustrating a process flow document structure according to the disclosure.
FIG. 2 is a flowchart illustrating service access information transmission steps (TS 26.501 5.3.2) between an AP 230 and an AF 210 according to the disclosure.
FIG. 3 is a flowchart illustrating service access information transmission steps between an AP 230 and an AF 210 according to the disclosure.
FIG. 4 is a flowchart illustrating a method in which a relay UE 300 processes a CRPS according to the disclosure.
FIG. 5 is a flowchart illustrating a method for identifying the capability of an edge server 240 according to the disclosure.
FIG. 6 is a conceptual diagram illustrating the architecture of a 5GMS system according to the disclosure.
FIG. 7 is a conceptual diagram illustrating a media capability UE architecture (PD for TS 26.119) according to the disclosure.
FIG. 8 a conceptual diagram illustrating the architecture of a UE 100 according to the disclosure.
FIG. 9 is a flowchart illustrating a method for processing a CRPS in a 5GMSd client 120 according to the disclosure.
FIG. 10 illustrates a method for assessing a CRPS received from an actor according to the disclosure.
FIG. 11 is a conceptual diagram illustrating the architecture of a UE 100 connected to an external UE 300 according to the disclosure.
FIG. 12 is a flowchart illustrating a dynamic process flow according to a UE capability change according to the disclosure.
FIG. 13 is a block diagram illustrating a UE 100 according to the disclosure.
FIG. 14 is a block diagram illustrating a network entity 210, 220, 230, 240, 300, 400, or 500 according to the disclosure.

### [Mode for Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing embodiments set forth herein, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, microcodes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. In addition, based on determinations by those skilled in the art, the embodiments of the disclosure may be applied to other communication systems through some modifications without significantly departing from the scope of the disclosure.

In the following description, terms for identifying access nodes, terms referring to network entities or network functions, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project long term evolution (3GPP LTE) standards may be used for the sake of descriptive convenience. However, the disclosure is not limited by these terms and names, and may be applied in the same way to systems that conform other standards.
- Related Art
- Capability discovery; method for identifying standard/capability supported by UE

5GMS Architecture (TS 26.501) defines a media player in a 5GMSd client.

5GMS Profiles, Codecs and Formats (TS 26.511) present a capability discovery as a method for indicating specifications of a 2D video encoder and a decoder supported by the media player.

The capability discovery may provide mimeType so as to identify whether a profile and a code are supported or not. For example, it may be identified whether a profile (for example, "avc1") corresponding to specific mimeType (for example, "video/mp4") or a codec (for example, "avc1.640028"= (H.264, 1080p, avg. 3Mbps, max. 8Mbps)) is supported or not.

5GMS Protocols (TS 26.512) provide isTypeSupported API as a function that supports the capability discovery.

In case that, with regard to content selected in a service discovery step, a document received as a media player entry allows selection from multiple codecs/profiles, the 5GMSd client selects from codecs/profiles supported by the media player among the same. For example, in case that the UE supports only 1080p, selection is made from options other than unsupported options (for example, 4K) among the options of the media player entry document.

### - Computation offloading method

In connection with a flow of processes including one or more processes, in case that the capability of the UE to be provided with a service cannot normally execute one or more processes, some processes may be executed by the UE's external UE or an external edge/cloud server or the like connected by a communication network, and the result may be delivered to the next process.

This is referred to as computation offloading, and examples thereof include split rendering, cloud gaming, and cloud services characterized in that the UE's resource burden is alleviated.

In case that a UE needs no computation offloading, all processes of one workflow are executed by the UE.

However, even if results of workflows are identical or similar, a first workflow having all processes executed by a UE and a second workflow having some processes executed outside the UE have different details of processes constituting the workflows.

For example, in case that a graphic rendering process cannot be executed due to a UE's burden, the UE transmit UE information necessary for graphic rendering in an additional step, 2D images rendered by the server are encoded in an additional step, and 2D compressed images received from the server are decoded in an additional step.
- Problems of related art
- Selection multiple workflows not supported

Current 5GMS supports the UE's discovery regarding various contents regarding the same workflow.

However, the same does not support a method in which multiple workflows are provided, and one is selected therefrom.
- There is no method for communication between the UE and the server for determining one among multiple workflows

Current 5GMS does not provide a step of requesting the UE's capability, a step of reporting the UE's capability, a step of making a determination based on the UE's capability, a step of providing various contents according to the capability determination, and the like.
- Method for describing a service configured by multiple kinds of workflows provided with regard to each UE capability

The service provider may a service that provide identical or similar user experiences as a result of different workflows not dependent on the UE's capability. For example, DASH is a technology in which 2D video contents encoded by multiple different options are prepared, and the UE selects the encoded media of a preferred option according to the capability.

AR split rendering is a major service to be solved in the disclosure, and the AR service provider wants to provide AR content to UEs having various capabilities. Unlike 2D videos, most UEs support basic components of AR content, such as points, lines, surfaces, effects of light, and effects of texture, but there is no limit on the size of spaces to be expressed, and the number of basic components may increase indefinitely, depending on the content. The higher the degree of complexity caused by the number of components of AR content, the more realistic the user feels, but the capability has no upper limit, and there is thus a need for a method for identifying whether the UE can process the content or not, prior to receiving the content. In addition, the degree of complexity of AR content (or capability required to process the same) may be designed based on the current UE capability, but a large difference in capability may be generated by development of the electronics industry, in only a number of years. If the degree of complexity of AR content is solely designed based on the latest products, some products cannot keep up. If the degree of complexity of AR content is solely designed based on low-capability products, there may be no need for the latest products. In an environment in which the AR service provider and the AR product provider are not identical, it may become gradually inefficient to match AR services and AR products one by one.

Accordingly, the AR service provider may preferably allocate sufficient resources such that the service to be provided can be executed not only by the AR UE, but also by the edge server of the communication network system that provides a computing service, thereby enabling the edge server to use the resources to execute the service. According to the disclosure, a service may be configured such that high-spec content that cannot be played by current UEs can be executed by the current edge server, and can be executed alone by future high-spec UEs without the edge server's help.

A service that a service provider provides to a UE's user through a communication network system may be defined by a workflow including one or more processes, and there may be various processes (or workflow) such as multimedia encoding, decoding, mathematical computation, artificial intelligence/machine learning, and inference. In the case of a legacy service, processes are determined implicitly such that a UE that wants to receive the service is only informed of the address by which encoded media can be received, receives the media, decodes the same, and displays the same on the screen. However, in the case of a service to be provided in the disclosure, only some of the entire processes are indicated to be executed by the UE according to the UE's capability, or the UE is enabled to select an entirely different workflow.

In order to describe such a service, one service will be described in the disclosure as multiple exclusive workflows. One service may be a unit configured such that, regardless of the capability of the UE used by the user, he/she can experience identical or similar service experiences.

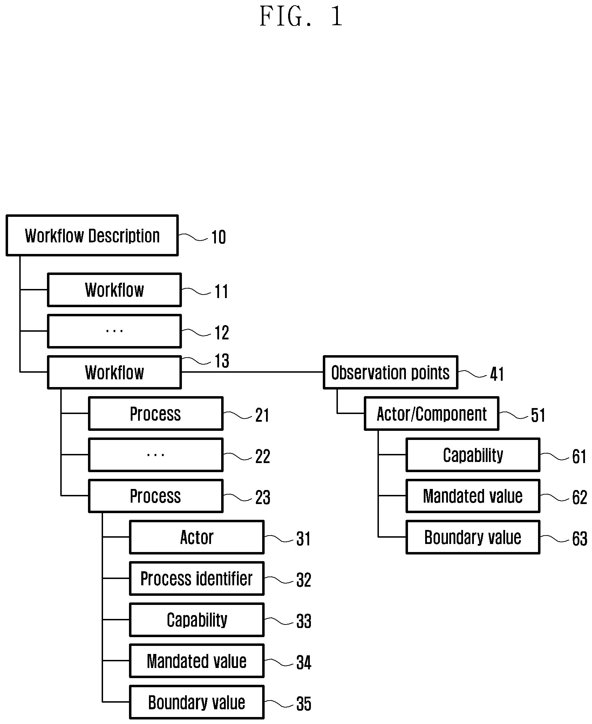

FIG. 1 is a conceptual diagram illustrating a workflow document structure according to the disclosure.

Referring to FIG. 1, in a service providing method according to the disclosure, an AR service provider may have a workflow description 10 including multiple workflows.

One workflow may be configured by one or multiple processes, and each workflow may be selected according to the UE's capability. A process may be configured by an actor 31 who executes the process, a process type, capability 33 required to execute the process, a capability-specific mandated value 34, and a boundary value 35.
- The actor 31 may be a UE, the UE's external UE, or an edge/cloud server which may be provided by a communication network system. Depending on the case, upload, download, or the like may also be the actor.
- The process type may be defined by the service provider or a separate standardization group through an identifier.
- The capability 33 may be categorized with regard to each service to be provided or media handling, and the category may be defined by the service provider or a separate standardization group through an identifier.
- The capability-specific mandated value 34 may refer to the minimum capability that needs to be supported for normal processing when the UE supports corresponding capability. For example, the same may mean that, if one million per second is specified for vertex rendering, the UE needs to be able to render at least one million vertices per second.
- The capability-specific boundary value 35 may refer to a value for dynamically determining whether a workflow is appropriate for the UE. At the boundary value or less, the UE may be instructed to perform a separate operation or notification. With regard to the UE that has reached the boundary value, the communication network system may select another workflow.

In addition, in connection with one process and the next process, the output from the preceding process is an input to the next process. Therefore, in case that a process and another process have a medium, that is, in case that the same undergo a step such as storage or network transmission, a storage process, an upload process, a downlink process, or the like may be described, and transmission requirements (minimum delay time, minimum transmission rate, and the like) may be described as capability. Capability requirements may be described as observation points for identifying the capability of the UE, the external UE, and the communication network system's edge/cloud server prior to selecting the corresponding workflow with regard to each process or each workflow.

According to the above description, a service may be described as a workflow description 10. the workflow description may be configured by multiple workflow 11, 12, and 13. Each workflow may be configured by multiple interconnected processes 21, 22, and 23 and multiple observation points 41. Each process may have an actor 31, a process type 32, capability 33, a capability-specific mandated value 34, and a capability-specific boundary value 35. The observation points 41 may be capabilities corresponding to the actor belonging to the workflow or the actor's respective function components 51 (for example, AR graphic renderer, AR scene manager, media encoder, media decoder, ...), and capability values 61, 62, and 63.

An embodiment of the disclosure may distinguish a case in which the UE has no AR graphic renderer in connection with an AR split rendering, a case in which the UE has an AR graphic renderer, and a case in which the UE has an AR graphic renderer and an AR scene manager. A workflow may be provided in each case. The capability value of the AR graphic renderer and the AR scene manager may be specified as workflow-specific capability requirements. Capability information may be exchanged with the UE that has accessed the communication network, and a workflow that the UE can support may be selected.

In another embodiment of the disclosure, in case that an artificial intelligence model having a relatively large file size is divided and executed by the UE and server in connection with a service such as split artificial intelligence inference, one artificial intelligence model may be divided into one or more transmittable layers. The connection between separate layers may be described as a process having a transmission requirement. Multiple workflows having different transmission rates as requirements may be provided. It may be possible to select a workflow having, as requirements of the process, the rate of upload or download which may be provided to the UE from the communication network, and an appropriate data transmission rate among the above-described workflows. The service provider may extract an actor-specific observation point with regard to each workflow from the workflow description, deliver the same to the communication network system, and provide content with regard to a workflow selected by the communication network system.
- Method for providing a service based on a service description including multiple workflows

The following is directed to a method wherein an application service provider (ASP) delegates a service to a communication network system, based on the above-described workflow description, and provides the user with identical or similar service experiences, based on the capability of actors, that is, UE, communication network system, and the like.

A communication network system which is a major example of the disclosure may be 3GPP 5GMS (Media Streaming, TS 26.501 v17.0). The disclosure described a changing method according to the disclosure, based on a procedure and a system message defined in 5GMS.

### - Service delegation step

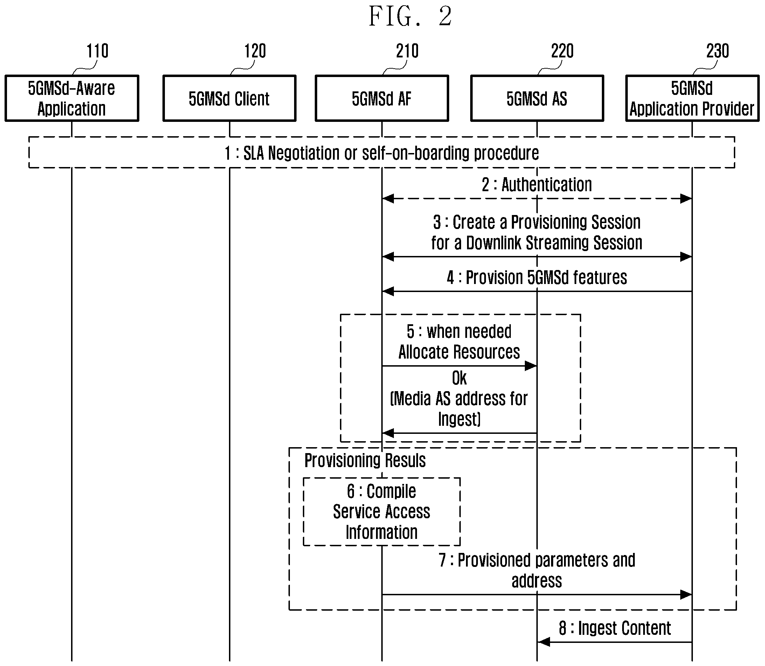

FIG. 2 is a flowchart illustrating service access information transmission steps (TS 26.501 5.3.2) between an AP 230 and an AF 210 according to the disclosure.

Referring to FIG. 2, the AP 230 may first have a server allocated thereto so as to control the service instead in the communication network system, based on a service license agreement (SLA) with the communication network system. In 5GMS, a delegation server is referred to as an application function (AF) 210, and the application provider (AP) 230 may communicate with the AF 210 through a 5GMS M1 interface. In a step of communication between the AP 230 and the AF 210 for service preparation, the AP 230 may transmit service-related information to the AF 210, and the AF 210 may compile service access information, based on the received service information.

Major steps among the flowchart steps illustrated in FIG. 2 will now be described.

In step 1, the application 110, the client 120, the AF 210, the AS 220, and the AP 230 may perform SLA negotiation or self on-boarding procedure.

In step 2, an authentication procedure may be performed between the AF 210 and the AP 230.

In step 3, a provisioning session for a downlink streaming session may be generated between the AF 210 and the AP 230.

In step 4, the 5GMSd application provider 230 specifies one or more 5GMSd features in the provisioning session. A set of authorized features is activated, such as content consumption measurement, logging, collection and reporting; QoE metrics measurement, logging, collection and reporting; dynamic policy; network assistance; and content hosting (including ingest)).

In step 5, the AF 210 transmits a message to the AS 220 to request resource allocation when needed. The AS 220 transmits an OK message including a media AS address for ingest to the AF 210.

In step 6, the 5GMSd AF 210 compiles the service access Information. The service access information contains access details and options such as the provisioning session identifier, M5d (media session handling) addresses for content consumption reporting, QoE metrics reporting, dynamic policy, network assistance, etc. When content hosting is offered and has been selected in step 4, then also M4d (media streaming) information such as the DASH MPD is included.

In step 7, the 5GMSd AF 210 provides the results to the 5GMSd application provider 230. For example, the AF 210 transmits provisioned parameters and addresses to the AP 230.
a. When the 5GMSd application provider 230 has selected full service access information, then the results are provided in the form of addresses and configurations for M2d (ingest), M5d (media session handling) and M4d (media streaming).
b. When the 5GMSd application provider 230 delegated the service access information handling to the 5GMS system, then a reference to the service access information (e.g. an URL) is provided. The media session handler 122 fetches the full service access information later from the 5GMSd AF 210.

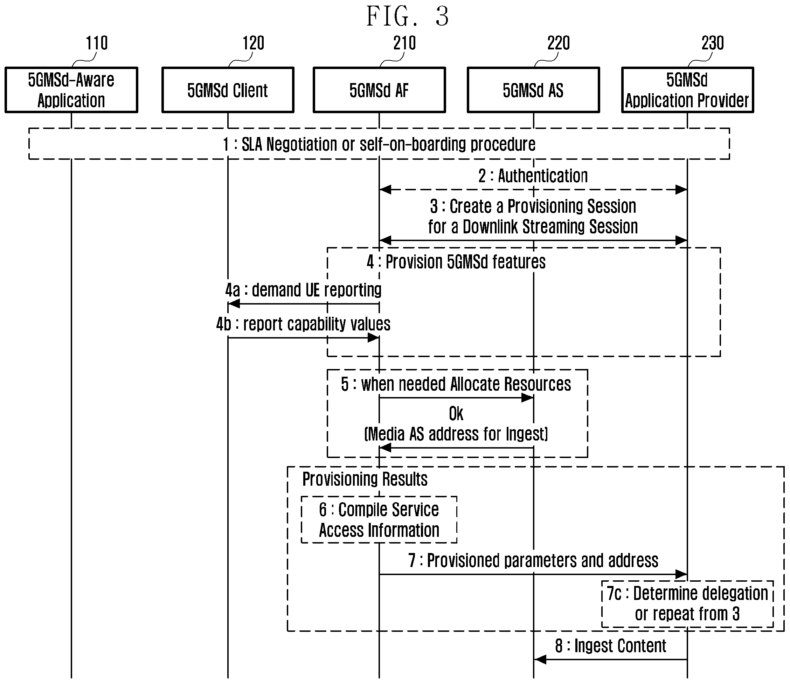

FIG. 3 is a flowchart illustrating service access information transmission steps between an AP 230 and an AF 210 according to the disclosure.

Referring to FIG. 3, communication between the AP 230 and the AF 210 according to the disclosure may be described as the following additional operations in the above-mentioned major steps.

In step 4, the 5GMSd application provider 230 specifies one or more 5GMSd features in the provisioning session. A set of authorized features is activated, such as content consumption measurement, logging, collection and reporting; QoE metrics measurement, logging, collection and reporting; dynamic policy; network assistance; capability reporting and content hosting (including ingest)).

When the capability reporting is offered and selected, the 5GMSd application provider 230 specifies a set of capabilities which should be satisfied for the content streaming session.

In step 4a, the AF 210 becomes aware of the required features and required capabilities for the session. The AF 210 demands the UE 100 to report values for the capability features. For example, the AF 210 may transmit a request message to the client 120 to request the capability value of the UE 100.

In step 4b, the UE 100 reports the latest values to AF 210. For example, the client 120 may transmit a capability value to the AF 210.

In step 6, the 5GMSd AF 210 compiles the service access information. The service access information contains access details and options such as the provisioning session identifier, M5d (media session handling) addresses for content consumption reporting, QoE metrics reporting, dynamic policy, network assistance, capability reporting, etc. When content hosting is offered and has been selected in step 4, then also M4d (media streaming) information such as the DASH MPD is included.

The 5GMSd AF 210 may not provide all of the capabilities. The 5GMSd AF 210 compiles the capability reporting which consists of the only available capability features.

In step 7, the 5GMSd AF 210 provides the results to the 5GMSd application provider 230. For example, the AF 210 transmits provisioned parameters and addresses to the AP 230.
a. When the 5GMSd application provider 230 has selected full service access information, then the results are provided in the form of addresses and configurations for M2d (ingest), M5d (media session handling) and M4d (media streaming).
b. When the 5GMSd application provider 230 delegated the service access information handling to the 5GMS system, then a reference to the service access information (e.g. an URL) is provided. The media session handler 122 fetches the full service access information later from the 5GMSd AF 210.
c. When the 5GMSd AF 210 does not provide some of the capabilities, the 5GMSd application provider 230 may determine whether to delegate the service access information handling to the 5GMS system, or repeat creating the provisioning session with less capability requirements from the step 3.

### - Actor capability information request step

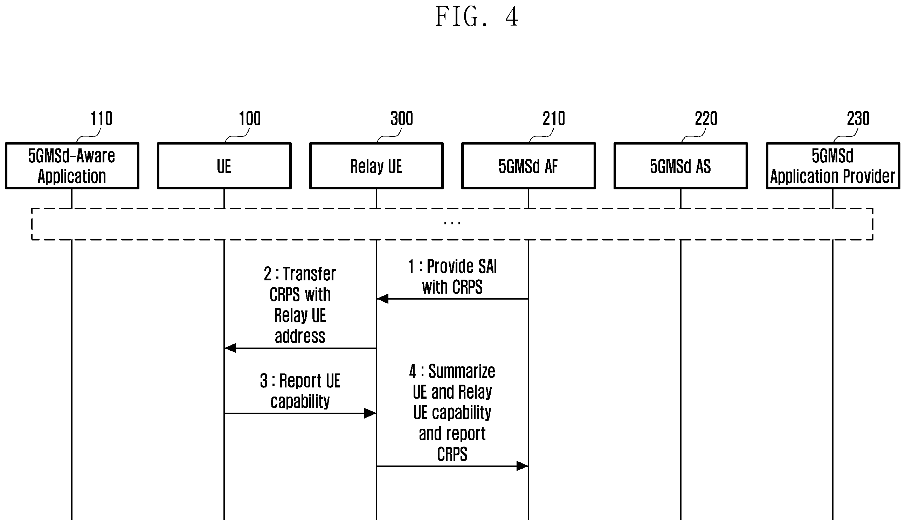

FIG. 4 is a flowchart illustrating a method in which a relay UE 300 processes a CRPS according to the disclosure.

Referring to FIG. 4, the AF 210 may generate SAI, based on service-related information received from the AP 230. In the disclosure, a system message generated by the control server of a communication network system to request capability items and item-specific mandated values with regard to the actor in the workflow of the service provider will be referred to as a capability reporting parameter set (CRPS). In the case of 3GPP 5GMS, the CRPS may be obtained by the AF 210, based on the process-specific capability item in the workflow in the workflow description, and capability items described with regard to each actor from workflow-specific observation points may be used as the CRPS.

The CRPS is configured by a CRPS identifier, a server address for reporting values, capability items, and item-specific mandated value, boundary value, reported value. The actor who has received the CRPS from the AF 210 in the service preparation step (step 4a in FIG. 3) may fill providable capability items with reported values and transmit results to addresses specified in server address items. (step 4b in FIG. 3).

Table 1 below illustrates a CRPS template.

**[Table 1]**

| Field name | Number | Description |
|---|---|---|
| CRPS identifier | One | Identifier used for identification by server that has received CRPS |
| Server address | One or more | Server address(s) to which CRPS is to be submitted |
| Capability | One or more | Capability item |
| Mandated value | One or more | Capability mandated value |
| Boundary value | Zero or more | Capability boundary value |
| Reported value | Zero or more | Value that can be actually provided by actor |

The actor may include not only a UE, but also an external UE, the communication network system's edge/cloud server, or a transmission path. The actor according to 3GPP 5GMS proposed in the disclosure includes a UE, a relay UE, an edge, an uplink, and a downlink. In the case of a workflow that assumes a relay UE 300, that is, a workflow that has an actor as the relay UE 300, the AF 120 may transmit a CRPS to the UE 100 because 5GMS has no separate identification regarding the relay UE 300. The UE 100 that actually communicates with the AF 210 may or may not be a relay UE 300. The CRPS may include item IsRelayUE in the capability list, and may have a mandated value configured to be "true". If the UE 100 that has received the corresponding CRPS is not a relay UE 300, the reported value regarding the corresponding item may be "false", the workflow for the relay UE 300 may not be used, and another workflow may be reviewed. In case that the UE 100 that communicates with the AF 210 is a relay UE 300, the relay UE 300 may change the CRPS's address information to that of itself, may deliver the same to the UE, may aggregate CRPS capability information received from the UE 100 and CRPS capability information thereof (of the relay UE 300), and may report one CRPS to the AF 210.

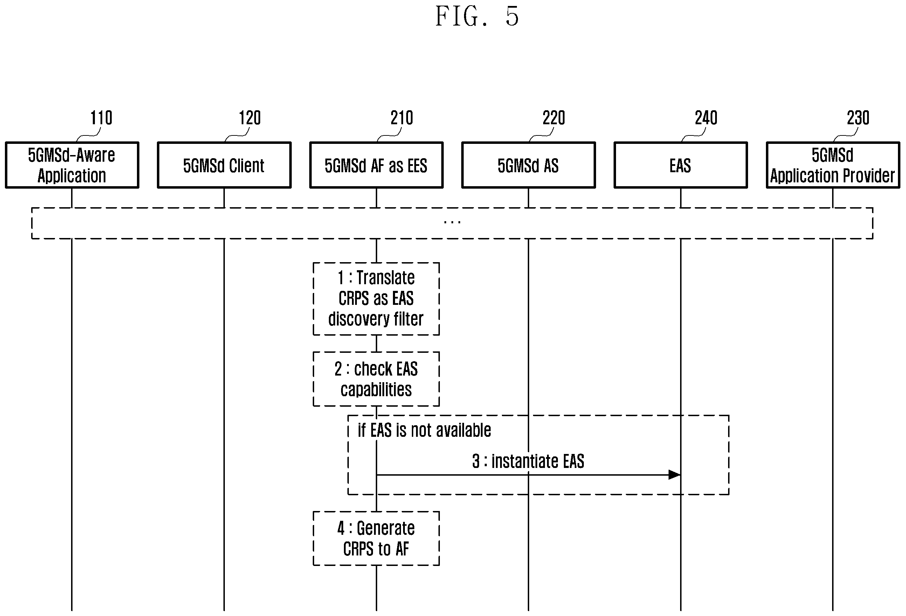

FIG. 5 is a flowchart illustrating a method for identifying the capability of an edge server 240 according to the disclosure.

Referring to FIG. 5, in case that the communication network system's edge/cloud server is an actor, the 5GMS AF 210 has an expanded architecture for supporting edge computing, based on section 4.5 of TS 26.501. The AF 210 operates as an edge enabler server (EES), and the EES manages the communication network system's computing resources so as to generate an edge application server (EAS) 240. When the AF 210 operates as an EES, the CRPS is converted by an EAS discovery filter. Since the EAS discovery filter has items defined in TS 23.558, the application provider 230 or the AF 210, in case that the actor is an edge, may compose the CRPS based on 23.558. Alternatively, the AF 210 may convert a specific capability item into an appropriate EAS discovery filter value, or the EAS discovery filter value may be expanded to support the specific capability item.

In case that the path of transmission with the communication network is an actor, the AF 210 may communicate with the 5G core system (TS 23.501), thereby receiving the uplink or downlink's traffic characteristics determined based on the subscription of the UE 100, the mobility of the UE 100, the capability of the cell to which the UE 100 belongs, or the like. Based on information received from the 5GC, the AF 210 may determine whether the CRPS capability item value satisfies the mandated value.

### - Method for providing capability information in UE

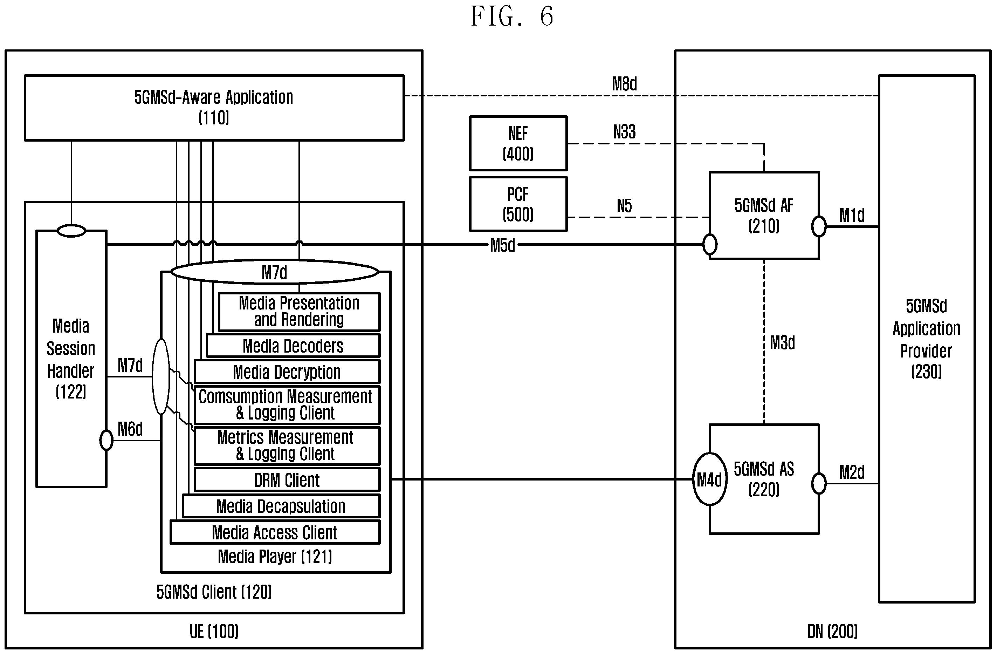

FIG. 6 is a conceptual diagram illustrating the architecture of a 5GMS system according to the disclosure.

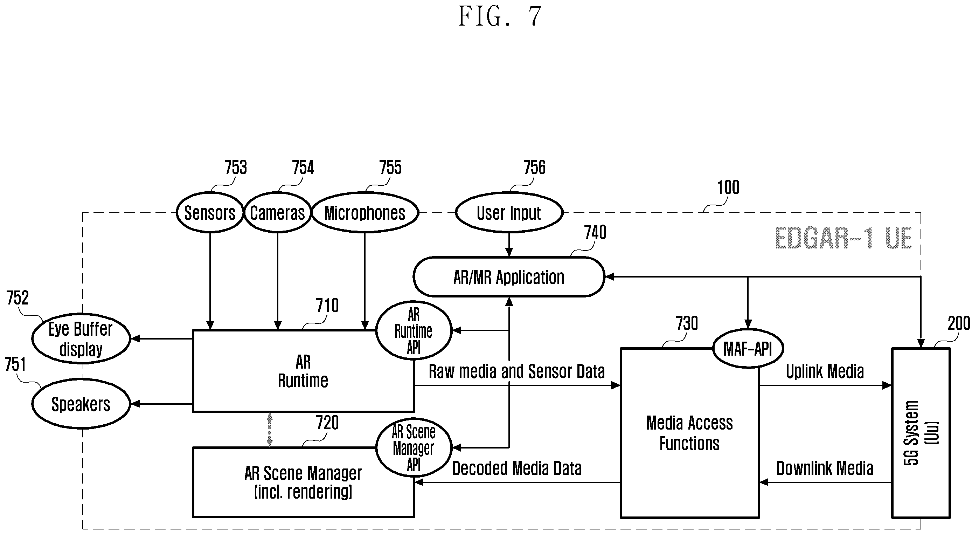

FIG. 7 is a conceptual diagram illustrating a media capability UE architecture (PD for TS 26.119) according to the disclosure.

The UE 100 may consider having a separate component in order to response to a capability information provision request received from the AF 210. FIG. 6 and FIG. 7 illustrate system architectures that are being discussed in 5GMS and MeCAR (Media Capability for AR, TS 26.119), respectively. Among the UE's capabilities in 5GMS, the capability of the media player in the 5GMSd client 120 may be collected by the metrics measurement and logging client (MMLC) in the media player and obtained through the 5GMS M7 interface. In MeCAR, an AR runtime 710, an AR scene manager 720, and a media access function (MAF) 730 are defined as components in the UE 100, and each component's capability may be obtained through API.

The interface of MeCAR under discussion does not map with 5GMS, and it is thus necessary to consider a mapping interface between MeCAR components and the media player 121 and the MSH 122 for interworking with the 5GMS system. Furthermore, it has not been determined whether the MAF 730 of MeCAR corresponds to the media player 121 of the 5GMS UE 100. 1) In case that the same corresponds to the media player 121, the fact that each external component (AR Runtime 710 and AR scene manager 720) has a capability providing interface needs to be considered. 2) In case that the same does not correspond to the media player 121, the interface with 5GMS MMLC needs to be considered. The current MeCAR structure in which the HW components (the speaker 751, the display 752, the sensor 753, the camera 754, the microphone 755, the UI 756, and the like) are connected through the AR runtime 710 cannot explain now capability information can be received in another device having no AR runtime 710, and has a problem in that a race condition may occur during component communication between applications in an environment in which two or more different AR applications (for example, navigation, AR call, AR messaging) operate simultaneously.

Therefore, in consideration of the 5GMS service and AR service and capability problems, a UE 100 architecture is proposed as follows:

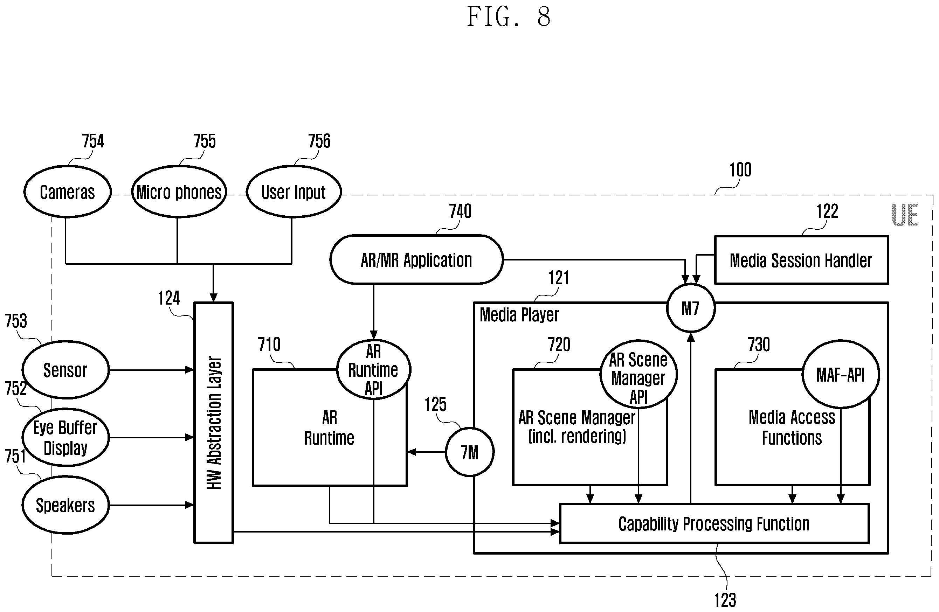

FIG. 8 a conceptual diagram illustrating the architecture of a UE 100 according to the disclosure.

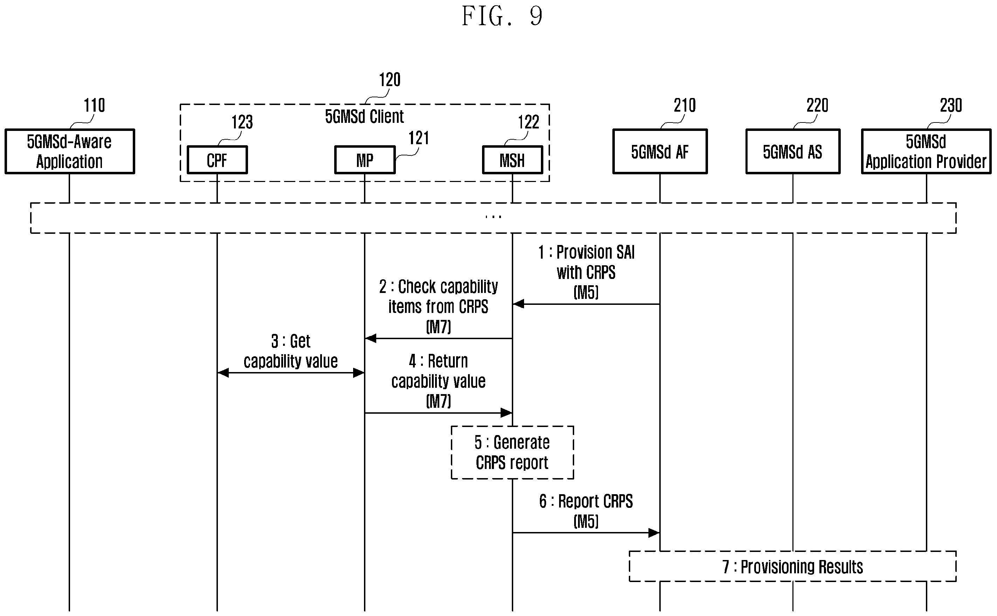

FIG. 9 is a flowchart illustrating a method for processing a CRPS in a 5GMSd client 120 according to the disclosure.

Referring to FIG. 8 and FIG. 9, a capability processing function (CPF) 123 is first proposed to measure the capability of the UE 100 and components in the UE 100. The CPF 123 may be included in the media player 121 and may incorporate an MMLC.

The largest difference between the CPF 123 and the 5GMS MMLC is the range of measurement targets. The difference lies in the fact that, while the MMLC collects the capability of components inside the media player 121, the CPF 123 measure the capability of the entire UE 100 and components in the UE 100. The CPF 123 may periodically measure the capability of HW components and may measure or collect the capability of components outside the media player 121, such as the illustrated AR runtime 710. In case that a component provides an API with regard to a collection target's value, the CPF 123 may collect the value through the API. Measurement target values may be values that can be converted when a CRPS of the application provider 230 or an observation point in the workflow description is received. Besides, if logic is installed in the CPF 123 through the M7 interface, collected values may be subjected to logic operations, and result values may be reported.

The difference between the CPF 123 and MeCAR's component-specific API may lie in measurement stability. In an environment in which two or more different AR applications (for example, navigation, AR call, AR messaging) operate simultaneously, if the applications simultaneously request one component to provide data, thereby starting measurement, applications other than the initial application may await responses. If a function is added to store measurement values regarding respective components, it is necessary to operate a process for measurement, a repository for storing measurement values, and an API with regard to each component in an inefficient manner. In addition, there may be no single API representing the capability of the UE 100, and there may be no API for HW. The CPF 123 handles measurement and collection regarding the UE 100 and components/HW in the UE 100, and provides values to applications and 5GMS MSH 122 through one interface, thereby providing a substantially concise interface.

The 7M 125 is an interface newly identified in the disclosure's UE architecture. The 7M 125 may be used by a separate component positioned outside the media player 121 to request data regarding the result of processing by the media player 121. Conventionally, the media player 121 has been considered as the final step of content consumption, but data output through the 7M 125 is proposed in line with the arrival of new types of media requiring separate components other than the media player 121. The disclosure intends to use the 7M 125 such that the output from the MAF 730 is provided to a component outside the media player 121. Accordingly, the AR scene manager 720 is illustrated in the drawings as being positioned inside the media player 121, and the AR runtime 710 is positioned as being positioned outside the media player 121, but it is obvious that the two may be positioned in opposite positions or may be both positioned outside the media player 121.

If the MSH 122 receives a CRPS from the AF 210, the MSH 122 may read capability item-specific measurement values regarding the entire UE 100, components in the UE 100, or HW in the UE 100 from the CPF 123 through the M7 interface, and may compose a report to the AF 210. Firstly, in the step in which the AF 210 provides service access information to the MSH 122 to prepare a service, if there is a CRPS is received SAI, the MSH 122 may request values regarding capability items in the CRPS through the M7 interface of the media player 121. The media player 121 may request the CPF 123 to provide requested values, and the CPF 123 may return values that have been continuously collected prior to the request. The MSH 122 may generate a CRPS to be reported based on received values, and may transmit the same to the server address through the M5 interface. The AF 210 and the AP 230 may determine whether or not to provide content, based on the CRPS.

### - Step of determining service type based on capability of actor

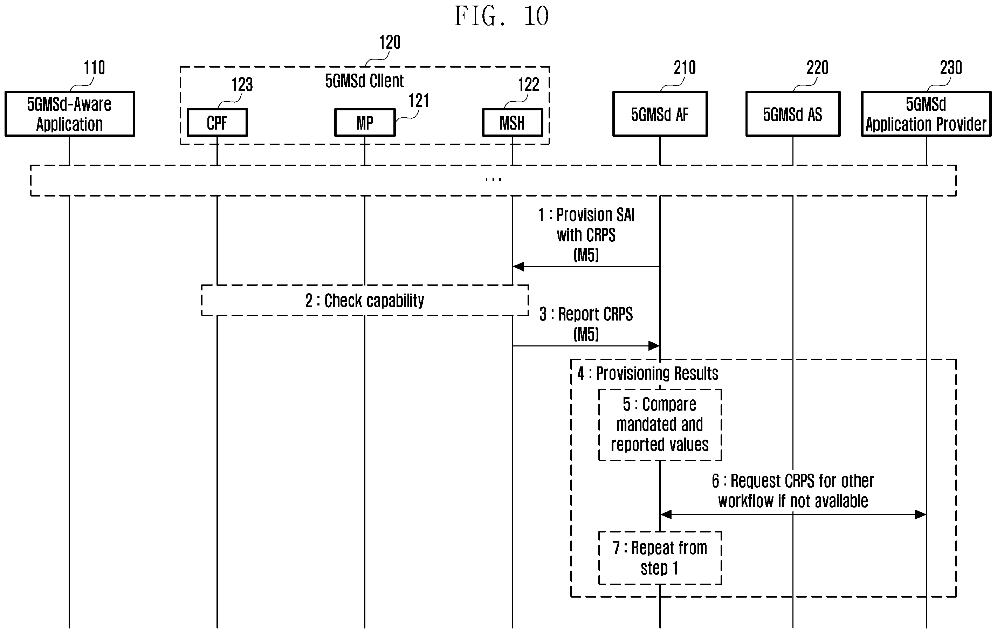

FIG. 10 illustrates a method for assessing a CRPS received from an actor according to the disclosure.

Referring to FIG. 10, the AP 230 in the disclosure may identify actors with regard to respective workflows from a workflow description having multiple workflows, prior to the step of preparing to provide a service, and may identify capability requirement information (for example, actors' capability items and capability item values) in advance. In an embodiment of the step of preparing to provide a service to the UE 100, capability requirement information that the AP 230 provides to the AF 210 may start from the highest level of requirements among the workflows. The AP 230 may deliver capability requirements to the AF 210, and may determine whether requirements match or not with regard to the CRPS generated by the AF 210. The determination may be made by the AP 230 or may be delegated to the AF 210. A bundle of workflows and capability requirement information may be provided to be delegated to the AF 210.

The AF 210 or AP 230 may generate capability requirement information as a CRPS and deliver the same, and may receive the result as a CRPS. The delivered CRPS may have mandated values and boundary values specified with regard to respective capability items. The CRPS received from the actor may have reported values specified with regard to respective capability items. Unspecified items may be considered a new capability items which the actor does not support, or which the actor cannot recognize. In case that a mandated value is higher than a reported value, the AF 210 or AP 230 may determine whether or not to provide the workflow related to the CRPS.

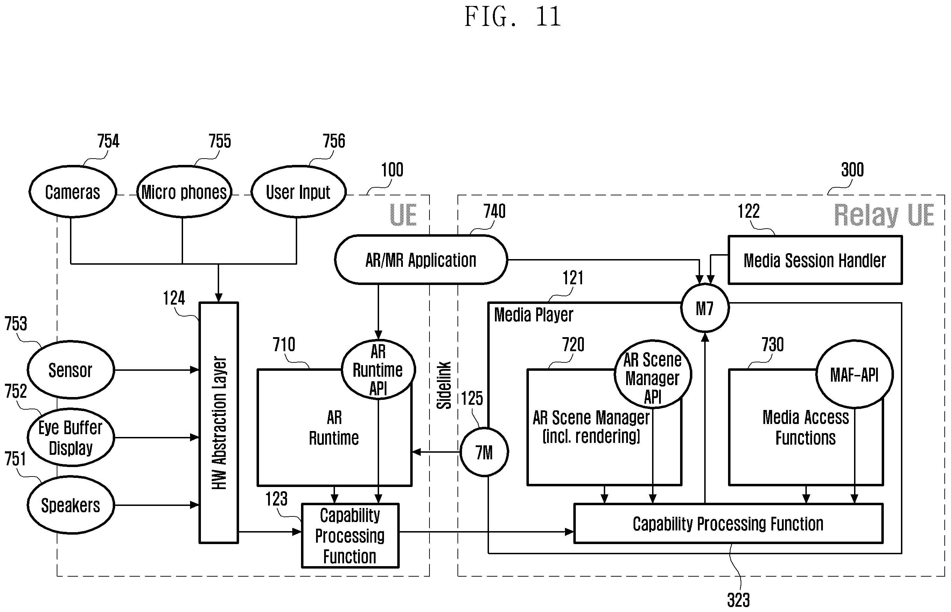

In case that the AF 210 or AP 230 determines not to provide the workflow related to the CRPS, the same may identify whether a workflow having a lower level of capability requirements or a higher level of capability requirements is satisfied. If the AF 210 has no CRPS regarding a different workflow, the AF 210 request the AP 230 to provide the same. If a CRPS for a new workflow is received from the AP 230, the same may restart from the first step in FIG. 11.

### - Step of configuring boundary values with regard to respective processes and capability items for UE/actor in AF

FIG. 11 is a conceptual diagram illustrating the architecture of a UE 100 connected to an external UE 300 according to the disclosure.

Referring to FIG. 11, in case that the AF 210 or AP 230 determines to provide a workflow related to a CRPS, the AF 210 or AP 230 may prepare a process to be executed by the actor and may instruct the same to execute the process when ready.

In case that the actor 100 is a UE 100, the AP 230 may indicate a process configuration for the 5GMS application executed in the UE 100 by using a 5GMS M8 interface. Process information belonging to a workflow is executed by using components in the UE 100 and the media player 121.

Together with the process configuration, the 5GMS application or MSH 122 may install an event regarding a boundary value in the CPF 123. In case that the vale of the corresponding capability item exceeds the boundary value at the mandated value in the capability information acquiring process (for example, mandated 30fps per second, boundary 15fps per second, and an actual value, if 15 or less, is described as exceeding the boundary value), the CPF 123 may trigger an event for reporting the same and deliver report data to the MSH1 122 through the M6 interface, and the MSH 122 may deliver the updated CRPS to the AF 210.

There is a possibility that the UE 100 will provide a lower level of capability compared with the service initiation determination timepoint, as in the case in which the number of processes executed in the UE 100 increases, the UE's battery level drops, or the CPU clock is adjusted due to heat generated by the UE 100. If the value of a capability item received by the AF 210 accordingly exceeds the boundary value, the AF 210 may determine a service change to a workflow having a lower level of capability requirements.

In case that the UE 100 and an external UE (relay UE 300) receive a service from the communication network system, the external UE 300 is exposed to the communication network system as a UE. In case that a CPF 323 exists as a component of the external UE 300, in case that the CPF 323 of the external UE 300 receives a capability item value from the CPF 123 of the UE 100, and in case that the same exceeds the boundary value, this may be reported to the AF 210.

The interface between the UE 100 and the external UE 300 may use 5GMS M5 such that the 5GMS Client of the external UE 300 operates like the AF 210. Alternatively, the two UEs 100 and 300 may be treated like one UE such that the CPF 123 of the UE and the CPF 323 of the external UE 300 may logically operate like two components of one UE, although physically separated.

### - Method for describing capability item and specification for AR

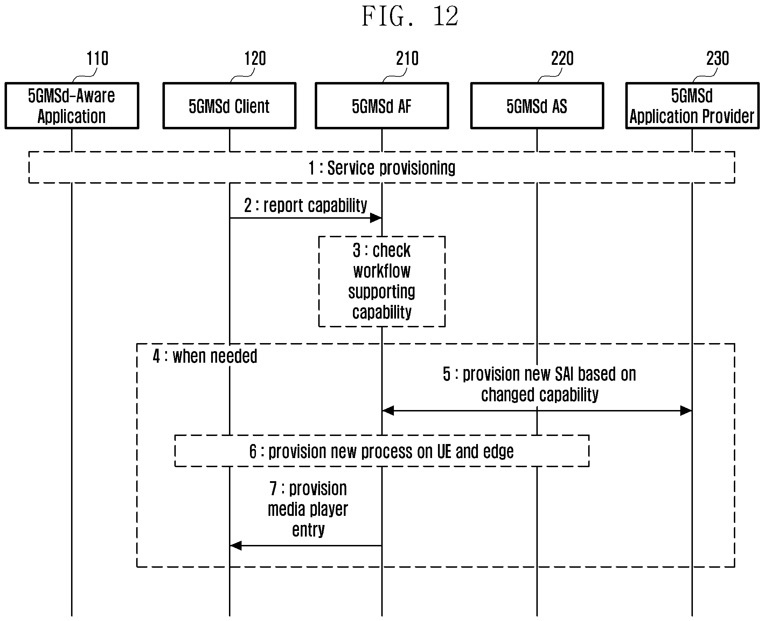

FIG. 12 is a flowchart illustrating a dynamic process flow according to a UE capability change according to the disclosure.

Referring to FIG. 12, a method for describing capability items of a UE, a server, or a component constituting the same, capability values, and required capability values is disclosed.

Various processes such as multimedia encoding, decoding, mathematical operations, artificial intelligence, machine learning, and inference may be included in the process flow.

In connection with capability items, establishing rules may be preferred to enumerating items.

In the disclosure, a capability item may be configured by a category, an item, and a capability index value, and the capability index value may be a requirement or actually measured value.

The category may be described as a scheme urn, and the scheme urn may have multiple components, the number of which is unlimited. For example, a group name that defines the scheme urn, the group's project name, and the project's detailed category name may constitute the scheme urn (for example, 3gpp:5gms:mecar).

Items (for example, fieldOfView) defined as dependent items of the scheme urn by the group or service provider 230 who has defined the scheme urn may become items.

Lastly, an item's value may be a service mandated value or a reported value of the UE 100 (or server). A value specified as a capability item's value in a process mandated item in a process flow description may be a mandated value (for example, if 100, playback is possible only if the field of view of 100 or larger), and a value reported as a capability item by the UE 100 may be a reported value (for example, if 50, it is indicated that the field of view of the UE 100 is 50 degrees or less).

An items value may be a single number, a character string, a range (minimum/maximum value), or a list. In case that a range or list is presented as a service mandated value, it is obvious that the mandate is not satisfied if the reported value of the UE 100 is out of the range or does not exist on the list.

The disclosure particularly defines the following capability items in connection with an AR service. These capability items and values thereof may be references to select a process flow.

Item isSupportUserSurroundings may be used to identify whether an AR UE 100 can recognize surrounding environments, generate userSurroundings (geometric space information), and transmit the same. If this item has a value of "true", the UE 100 may include a process that provides userSurroundings in the process flow when the AR service is executed.
userSurroundings is three-dimensional data or data by which three-dimensional data may be generated, and may provide the user's surrounding environment's geometric information. The renderer may consider userSurroundings together with a user pose such that an AR object interacts with the surrounding environment, for example, the AR object bounces off an actual peripheral wall, the AR object is covered by a peripheral object, or the AR object is broken.

As additional attributes of userSurroundings, geometryAll, geometryInViewFrustum, geometryLatest, geometryWithConfidence, and the like may be provided. In order to describe transmitted userSurroundings, geometryAll may refer to all user periphery surrounding information tracked by the UE 100. geometryInViewFrustum may mean that only geometries corresponding to the space seen by the user in the current pose (position and direction in space) of the UE 100 are included. geometryLatest may mean that only valid geometries tracked for the latest preconfigured period of time (for example, 5 seconds) are included. geometryWithConfidence may mean that only valid geometries having a predetermined level of confidence or higher (for example, 90% or higher) are included.

Item isSupportPosEyeFocused is used identify whether the spatial position at which the user of the AR UE 100 gazes can be inferred. If this item has a value of "true", the process flow may include a process in which the UE 100 provides posEyeFocused when the AR service is executed, and the render may provide an additional differentiation regarding a focused position.

Item supportedType may be used to identify whether a specific UE 100 supports 2D, AR, VR, MR, artificial intelligence/machine learning (AI/ML), or the like. Legacy UEs provided 2d video playback only, but a separate item may be necessary to identify which service can be provided by a new UE 100. A process flow may be selected according to one or more values indicated in this item.

Item fieldOfView may be information regarding the field of view provided when the UE 100 is cradled on the user. According to the service provider's content details, there may be a requirement regarding the field of view, and the same may be used to select a process flow for a UE 100 which does not satisfy the (for example, VR) field of view.

Item batteryLevel may indicate the battery level when the UE 100 is not being charged. Even if the capability of the UE 100 is enough to execute a process, a process flow having a lower level of capability requirement may be selected according to the battery level. If the battery level drops over time from a sufficient level at the timepoint at which the service is first started, the server may make a determination based on the item value periodically reported by the UE 100. Alternatively, the UE 100 may request the server to conduct dynamic reallocation, based on the item value, such that the server selects a new process flow.

Items poseCorrectionTime, poseAccuracy, and mtpAccuracy may indicate the time value necessary for a pose correction process performed by the UE 100 in connection with an AR split rendering service, the difference between the pose value predicted by the server and the actual final pose value, and the difference between the pose time predicted by the server and the actual final time. Above items indicate maximum allowed values in the process flow description, and values reported by the UE 100 become result record values obtained as a result of the process during service execution.

The next is a procedure of a communication network system according to a dynamic change in the capability item value.

In step 1, a service preparation step may end, and a service may start.

In step 2, the UE 100 may report capability to the AF 210. The capability item may be added or deleted, compared with the service initiation timepoint, and the maintained item value may be changed.

In step 3, the AF 210 may compare the capability item required by the process flow and the mandated value, thereby comparing the item's increase/decrease and the value's change.

In step 4, the AF 210 may determine that the current process flow cannot be maintained according to the item's increase/decrease value's change.

In step 5, if the mandated value of the item required by the process flow is not satisfied, the AF 210 may communicate with the ASP 230 and receive effective process flow information regarding available capability items and values.

In step 6, preparation of a process to be executed in the UE 100 and edge server may be requested, and the preparation result may be received.

In step 7, a new media player entry may be delivered, and a process based on the changed capability may be executed in the UE 100, the edge server, and the 5G communication network.

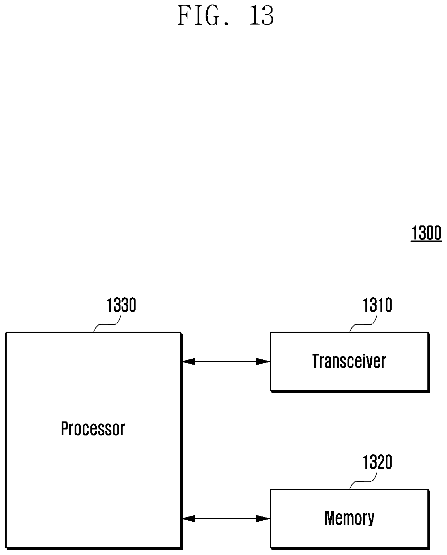

FIG. 13 is a block diagram illustrating a UE 100 according to the disclosure.

Referring to FIG. 13, the UE 100 according to the disclosure may include a transceiver 1310, a memory 1320, and a processor 1330. The transceiver 1310, the memory 1320, and the processor 1330 of the UE 100 may operate according to a method for operating the UE 100. Components of the UE 100 are not limited to those illustrated in FIG. 13. For example, the UE 100 may include a larger number of components than the components in FIG. 13, or a smaller number of components. Furthermore, the transceiver 1310, the memory 1320, and the processor 1330 of the UE 100 may may be implemented as a single chip.

The transceiver 1310 refers to the receiver of the UE 100 and the transmitter of the UE 100 as a whole, and may transmit/receive signals with a base station or a network entity. A signal transmitted/received with the base station may include control information and data. To this end, the transceiver 1310 may include an RF transmitter for up-converting the frequency of a transmitted signal and amplifying the same, and an RF receiver for low-noise amplifying a received signal and down-converting the frequency thereof. However, this is only an embodiment of the transceiver 1310, and components of the transceiver 1310 are not limited to the RF transmitter and RF receiver. For example, the transceiver 1310 may include a power amplifier 10 according to the disclosure.

In addition, the transceiver 1310 may include a wired/wireless transceiver, and may include various components for transmitting/receiving signals.

In addition, the transceiver 1310 may receive a signal through a radio channel and output the same to the processor 1330, and may transmit a signal output from the processor 1330 through the radio channel.

In addition, the transceiver 1310 may receive a communication signal and output the same to the processor, and may transmit a signal output from the processor to a network entity through a wired/wireless network.

The memory 1320 may store data and programs necessary for operations of the UE 100. In addition, the memory 130 may store control information or data included in a signal acquired by the UE 100. The memory 1320 may be configured by storage media such as a ROM, a RAM, a hard disk, a CD-ROM, and a DVD, or a combination of storage media.

The processor 1330 may control a series of processes such that the UE 100 can operate according to the above-described embodiment of the disclosure. The processor 1330 may include one or more processors. For example, the processor 1330 may include a communication processor (CP) configured to perform control for communication, and an application processor (AP) configured to control upper layers (for example, application programs).

The UE 100 according to the disclosure may be at least one of various kinds of communication nodes. For example, the UE 100 may be at least one of a UE, a base station, or various network entities used in various communication systems.

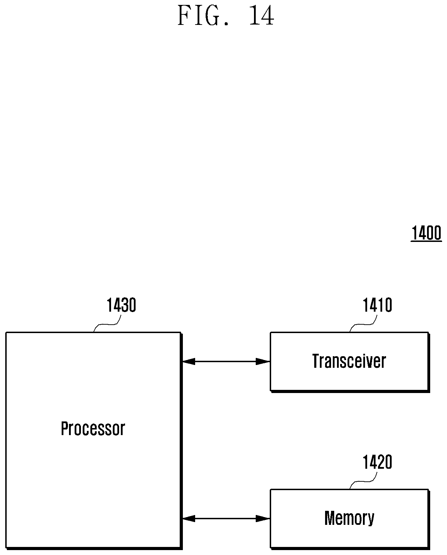

FIG. 14 is a block diagram illustrating a network entity 210, 220, 230, 240, 300, 400, or 500 according to the disclosure.

The network entity 210, 220, 230, 240, 300, 400, or 500 according to the disclosure may include a processor 1430 configured to control overall operations of the network entity 210, 220, 230, 240, 300, 400, or 500, a transceiver 1410 including a transmitter and a receiver, and a memory 1420. Obviously, the above example is not limitative, and the network entity 210, 220, 230, 240, 300, 400, or 500 may include a larger number of components than the components in FIG. 14, or a smaller number of components.

According to the disclosure, the transceiver 1210 may transmit/receive signals with at least one of other network entities or the UE 100. A signal transmitted/received with at least one of other network entities or the UE 100 may include control information and data.

According to the disclosure, the processor 1430 may control the network entity 210, 220, 230, 240, 300, 400, or 500 so as to perform the above-described operations in FIG. 1 to FIG. 12. Meanwhile, the processor 1430, the memory 1420, and the transceiver 1410 are not necessarily implemented as separate modules, and may obviously be implemented as one component (for example, a single chip). In addition, the processor 1430 and the transceiver 1410 may be electrically connected.

According to the disclosure, the memory 1420 may store data such as basic programs for operations of the network entity 210, 220, 230, 240, 300, 400, or 500, application programs, and configuration information. Particularly, the memory 1420 provides stored data at the request of the processor 1430. The memory 1420 may be configured by storage media such as a ROM, a RAM, a hard disk, a CD-ROM, and a DVD, or a combination of storage media. In addition, multiple memories 1420 may be provided. IN addition, the processor 1430 may perform the above-described embodiments, based on a program for performing the above-described embodiments of the disclosure stored in the memory 1420.

### Industrial Applicability

The disclosure is applicable to electronics industry and information communication industry.

## Claims

1. A method for operating an application function (AF) entity, the method comprising:
transmitting a report request message to a terminal;
receiving a report message comprising capability values of the terminal, in response to the report request message;
compiling service access information, based on the capability values of the terminal; and
transmitting a message comprising provisioned parameters and addresses to an application provider, based on the compiled service access information.

2. A method for operating a first terminal, the method comprising:
receiving service access information (SAI) comprising a first capability reporting parameter set (CRPS) from an application function (AF) entity;
transmitting SAI comprising the first CRPS to a second terminal;
receiving a report message comprising capability values of the second terminal from the second terminal, in response to the SAI; and
transmitting a second CRPS comprising the capability values of the second terminal and capability values of the first terminal to the AF entity.

3. A method for operating an edge enabler server (EER), the method comprising:
converting a first capability reporting parameter set (CRPS) into a filter of an edge application server (EAS);
identifying capability of the EAS;
in case that the EAS is not available, based on the capability of the EAS, transmitting a message to the EAS to indicate that the EAS is not available; and
generating a second CRPS, based on the capability of the EAS.

4. A terminal comprising:
a transceiver;
a processor configured to control the transceiver; and
a memory configured to store instructions executed by the processor,
wherein the processor comprises:
a media player (MP) comprising a capability processing function (CPF); and
a media session handler (MSH) connected to the media player.

5. The terminal of claim 4, wherein the MSH is configured to receive service access information (SAI) comprising a first capability reporting parameter set (CRPS) from an application function (AF) entity, and transmit the CRPS to the MP.

6. The terminal of claim 5, wherein the MP is configured to identify capability items, based on the CRPS.

7. The terminal of claim 6, wherein the MP is configured to receive capability values from the CPF.

8. The terminal of claim 7, wherein the MP is configured to transmit the capability values to the MSH.

9. The terminal of claim 8, wherein the MSH is configured to generate a report message comprising a second CRPS, based on the capability values.

10. The terminal of claim 9, wherein the MSH is configured to transmit the report message to the AF.

11. A method for operating an application function (AF) entity, the method comprising:
transmitting service access information (SAI) comprising a first capability reporting parameter set (CRPS) to a media session handler (MSH) of a terminal;
receiving a second CRPS generated based on the first CRPS from the MSH;
comparing a capability item-specific mandated value and a capability item-specific boundary value, based on the second CRPS;
determining whether a process flow regarding the terminal can be provided, based on a result of the comparison; and
in case that the process flow cannot be provided, transmitting a message requesting a CRPS for a different process flow to an application provider.

12. A method for operating an application function (AF) entity, the method comprising:
receiving, from a terminal, a capability item value regarding the terminal;
determining, based on the capability item value, whether a process flow regarding the terminal can be provided;
in case that the process flow cannot be provided, transmitting a request message requesting service access information (SAI) to an application provider, based on the capability item value;
receiving a response message comprising the SAI from the application provider; and
transmitting a media player entry to the terminal, based on the SAI.
